# EUROPÄISCHE PATENTSCHRIFT

(11) **EP 3 342 195 B1**
(45) Veröffentlichungstag und Bekanntmachung des Hinweises auf die Patenterteilung: **21.08.2019**
(21) Anmeldenummer: 16757879.8
(22) Anmeldetag: 26.08.2016
(51) Int. Cl.: H04W 4/46, H04L 29/06

(54) **VORRICHTUNG, VERFAHREN UND COMPUTERPROGRAMM ZUM BEREITSTELLEN VON ÜBERTRAGUNGSPARAMETERN ZWISCHEN FAHRZEUGEN**
DEVICE, METHOD AND COMPUTER PROGRAM FOR PROVIDING TRANSMISSION PARAMETERS BETWEEN VEHICLES
DISPOSITIF, PROCÉDÉ ET PROGRAMME D'ORDINATEUR POUR FOURNIR DES PARAMETRES DE TRANSMISSION ENTRE VEHICULES

(30) Priorität: 27.08.2015 DE 102015114285
(43) Veröffentlichungstag der Anmeldung: 04.07.2018
(73) Patentinhaber: Volkswagen Aktiengesellschaft, 38440 Wolfsburg (DE)
(72) Erfinder: KWOCZEK, Andreas, 38165 Lehre (DE)
(74) Vertreter: 2SPL Patentanwälte PartG mbB
(86) Internationale Anmeldenummer: PCT/EP2016/070177
(87) Internationale Veröffentlichungsnummer: WO 2017/032875

(56) Entgegenhaltungen:
- DE-A1-102010 038 640
- DE-B4-102015 114 285
- US-A1- 2009 227 282
- European Standard: "Intelligent Transport Systems (ITS); Vehicular Communications; Basic Set of Applications; Part 2: Specification of Cooperative Awareness Basic Service", , 30. November 2014 (2014-11-30), Seiten 1-44, XP055309131, Gefunden im Internet: URL:http://www.etsi.org/deliver/etsi_en/30 2600_302699/30263702/01.03.02_60/en_302637 02v010302p.pdf [gefunden am 2016-10-10]
- Etsi: "Intelligent Transport Systems (ITS); Security; Security header and certificate formats Technical Specification", , 1. April 2013 (2013-04-01), Seiten 2013-4, XP055190564, Gefunden im Internet: URL:http://www.etsi.org/deliver/etsi_TS/10 3000_103099/103097/01.01.01_60/ts_103097v0 10101p.pdf [gefunden am 2015-05-20]

## Beschreibung

Ausführungsbeispiele betreffen eine Vorrichtung, ein Verfahren und ein Computerprogramm für eine Fahrzeug-zu-Fahrzeug-Datenkommunikation eines Kraftfahrzeugs.

Fahrzeug-zu-Fahrzeug-Datenkommunikation (auch engl. Car2Car, C2C, oder Vehicle2Vehicle, V2V) und Fahrzeug-zu-Infrastruktur-Datenkommunikation (auch engl. Car2Infrastructure, C2I oder Vehicle2Roadside, V2R) sind ein Brennpunkt automobiler Forschung im 21. Jahrhundert. Die Datenkommunikation zwischen Fahrzeugen oder zwischen Fahrzeugen oder Verkehrsinfrastruktur ermöglicht eine Vielzahl neuer Möglichkeiten, beispielsweise eine Koordination von Fahrzeugen untereinander oder eine Datenkommunikation von Fahrzeugen mit der Verkehrsinfrastruktur, beispielsweise um den Fahrzeugen Stauwarnungen bereitzustellen. Dabei besitzen Fahrzeuge, die zur C2C oder C2I (auch zusammengefasst unter Fahrzeug-zu-X-Datenkommunikation, engl. Car2X, C2X oder Vehicle2X, V2X) eine Sende- und Empfangseinheit um mit anderen Fahrzeugen kommunizieren zu können, beispielsweise über direkte Funkverbindungen oder Mobilfunksysteme. Die Datenkommunikation kann dabei beispielsweise zwischen Fahrzeugen oder zwischen Fahrzeugen und Verkehrsinfrastruktur innerhalb eines Radius von wenigen hundert Metern begrenzt sein. Dabei finden häufig periodische Status-Nachrichten Anwendung, sog. Cooperative Awareness Messages (CAM), mit denen periodisch ein Status des Fahrzeugs, etwa seine Position, übertragen wird. Die Datenkommunikation zwischen Fahrzeugen über C2C oder C2I kann dabei verschlüsselt ablaufen, und sie kann über Zertifikate gesichert sein, beispielsweise über Langzeitzertifikate (auch engl. Long Term Certificates, LTC) oder nur begrenzt zeitlich gültige Kurzzeitzertifikate, sog. Pseudonymzertifikate (auch engl. Pseudonym Certificates, PC). Ein bekanntes Verfahren zur C2X-Kommunikation, bei dem sicherheitsrelevante Informationen mit kürzerer Verzögerungszeit ausgetauscht werden können als weniger sicherheitsrelevante, wird in der DE 10 2010 038 640 A1 beschrieben.

Moderne Fahrzeuge sind häufig mit einer Vielzahl von Sensoren ausgestattet, die verschiedenste Daten des Kraftfahrzeugs aufzeichnen, beispielsweise die Geschwindigkeit, Beschleunigung, Verbrauch oder Position, aber auch Datenintensivere Daten, wie z.B. Videodaten oder die Entfernung von Fahrzeugen in einer Umgebung des Fahrzeugs. Diese Daten können in manchen Fällen zu groß sein, um zeitgerecht über die für Status-Nachrichten ausgelegte Technologie übertragen zu werden.

Es besteht daher der Bedarf, ein verbessertes Konzept bereitzustellen, um eine Übertragung von Daten, die eine höhere Anforderung an eine Übertragungskapazität oder eine Latenz aufweisen, zu ermöglichen. Diesem Bedarf wird durch Vorrichtungen, Verfahren und Computerprogrammen gemäß den unabhängigen Ansprüchen Rechnung getragen.

Zur Datenübertragung über die direkten Gerät-zu-Gerät-Verbindungen muss in einigen Ausführungsbeispielen die Datenverbindung aufgebaut werden. Ausführungsbeispiele basieren auf einer Übertragung von Übertragungsparametern zwischen Kraftfahrzeugen über eine erste Funkschnittstelle, beispielsweise basierend auf einem Fahrzeug-zu-Fahrzeug-Kommunikationssystem. Auf Basis dieser Übertragungsparameter kann in zumindest einigen Ausführungsbeispielen eine Datenverbindung aufgebaut werden.

Zur Übertragung der Übertragungsparameter ist dabei eine Adressierung des Kraftfahrzeugs nötig. Ausführungsbeispiele nutzen dabei Pseudonymzertifikate, die in den Cooperative Awareness Messages periodisch in der Fahrzeug-zu-Fahrzeug-Kommunikation versendet werden. Diese CAM umfassen ein Pseudonym, das dem Kraftfahrzeug zugeordnet ist, zusammen mit dem Bewegungsvektor und dem Standort. In zumindest manchen Ausführungsbeispielen ermitteln die Fahrzeuge basierend auf den Standorten und den Bewegungsvektoren eine Karte der Fahrzeuge in der Umgebung. Einige Ausführungsbeispiele können dabei das Pseudonymzertifikat nutzen, um die Fahrzeuge eindeutig über die Fahrzeug-zu-Fahrzeug-Schnittstelle anzusprechen und um die Übertragung der Sensordaten auf einem Mobilfunkkanal zu bitten.

Ausführungsbeispiele können diese beispielsweise durch ein Bereitstellen von Übertragungsparametern, die eine Datenkommunikation auf einer zweiten Funkschnittstelle betreffen, über eine erste Funkschnittstelle erreichen. Eine Vorrichtung für eine Fahrzeug-zu-Fahrzeug-Datenkommunikation kann gemäß Ausführungsbeispielen ausgebildet sein, über eine erste Funkschnittstelle und über eine zweite Funkschnittstelle mit einem weiteren Kraftfahrzeug zu kommunizieren. Dabei kann die erste Funkschnittstelle beispielsweise eine direkte Kommunikation zwischen den Fahrzeugen bereitstellen, mit einer geringeren Datenübertragungskapazität, und die zweite Funkschnittstelle kann eine Datenkommunikation mit einer größeren Übertragungskapazität bereitstellen, kann aber beispielsweise eine dedizierten Verbindungsaufbau bevor einer Datenübertragung benötigen. Sollen beispielsweise Daten übertragen werden, die die größere Übertragungskapazität nötig machen, so kann die Vorrichtung die Übertragungsparameter an das weitere Kraftfahrzeug übertragen, und basierend auf den Übertragungsparametern eine Datenkommunikationsverbindung über die zweite Funkschnittstelle mit dem weiteren Kraftfahrzeug aufbauen.

Ausführungsbeispiele schaffen eine Vorrichtung für eine Fahrzeug-zu-Fahrzeug-Datenkommunikation eines Kraftfahrzeugs. Die Vorrichtung umfasst eine erste Funkschnittstelle zur Datenkommunikation des Kraftfahrzeugs mit einem weiteren Kraftfahrzeug über ein erstes Datenkommunikationsprotokoll und mit einer ersten Übertragungskapazität. Die Vorrichtung umfasst eine zweite Funkschnittstelle zur Datenkommunikation des Kraftfahrzeugs mit dem weiteren Kraftfahrzeug über ein zweites Datenkommunikationsprotokoll und mit einer zweiten Übertragungskapazität. Die zweite Übertragungskapazität ist größer als die erste Übertragungskapazität ist. Die Vorrichtung umfasst eine Einrichtung, ausgebildet zum Erhalten von Datennachrichten über einen Status von Kraftfahrzeugen in einer Umgebung des Kraftfahrzeugs über die erste Funkschnittstelle. Die Datennachrichten umfassen Pseudonymzertifikate einer Fahrzeug-zu-Fahrzeug-Datenkommunikation. Die Pseudonymzertifikate ermöglichen eine temporäre Identifizierung der Kraftfahrzeuge in der Umgebung des Kraftfahrzeugs. Die Einrichtung ist ferner ausgebildet zum Bereitstellen, über die erste Funkschnittstelle, von Übertragungsparametern betreffend eine Datenkommunikation zwischen dem Kraftfahrzeug und dem weiteren Kraftfahrzeug über die zweite Funkschnittstelle, basierend auf einer Adressierung des weiteren Kraftfahrzeugs basierend auf den Pseudonymzertifikaten. Die Vorrichtung kann es beispielsweise ermöglichen, Fahrzeuge in einer Umgebung des Kraftfahrzeugs anhand ihrer Pseudonymzertifikate zu identifizieren und Ihnen die Übertragungsparameter mit Hilfe der Übertragungsparameter (als Adressierung) zu übertragen. Beispielsweise kann das Kontrollmodul ausgebildet sein, um die Übertragungsparameter zu übertragen, falls Daten übertragen werden sollen, die eine größere Übertragungskapazität nötig machen. Beispielsweise kann das Kontrollmodul ausgebildet sein, um Kraftfahrzeuge in einer Umgebung des Kraftfahrzeugs, die Datennachrichten bereitstellen, über die Pseudonymzertifikate zu identifizieren und über die Pseudonymzertifikate anzusprechen oder zu adressieren.

Ausführungsbeispiele schaffen eine Vorrichtung für eine Fahrzeug-zu-Fahrzeug-Datenkommunikation eines Kraftfahrzeugs. Die Vorrichtung umfasst eine erste Funkschnittstelle zur Datenkommunikation des Kraftfahrzeugs mit einem weiteren Kraftfahrzeug über ein erstes Datenkommunikationsprotokoll und mit einer ersten Übertragungskapazität. Die Vorrichtung umfasst ferner eine zweite Funkschnittstelle zur Datenkommunikation des Kraftfahrzeugs mit dem weiteren Kraftfahrzeug über ein zweites Datenkommunikationsprotokoll und mit einer zweiten Übertragungskapazität. Die zweite Übertragungskapazität ist größer als die erste

Übertragungskapazität. Die Vorrichtung umfasst ferner eine Einrichtung zum Bereitstellen, über die erste Funkschnittstelle, von Übertragungsparametern betreffend eine Datenkommunikation zwischen dem Kraftfahrzeug und dem weiteren Kraftfahrzeug über die zweite Funkschnittstelle.

Die Vorrichtung kann es beispielsweise ermöglichen, eine zweite Datenkommunikationsverbindung zwischen dem Kraftfahrzeug und dem weiteren Kraftfahrzeug aufzubauen, beispielsweise um Sensordaten zu übertragen, für die die Übertragungskapazität der ersten Funkschnittstelle nicht ausreicht.

In manchen Ausführungsbeispielen ist die Einrichtung ausgebildet, Datennachrichten über einen Status von Kraftfahrzeugen in einer Umgebung des Kraftfahrzeugs über die erste Funkschnittstelle zu erhalten. Die Datennachrichten können beispielsweise eine (temporäre) Kennung der Kraftfahrzeuge in einer Umgebung des Kraftfahrzeugs umfassen, eine Position und einen Bewegungsvektor, oder beispielsweise einen Hinweis auf verfügbare Sensordaten, die beispielsweise über die zweite Funkschnittstelle übertragen werden könnten.

In manchen Ausführungsbeispielen können die Datennachrichten digitale Kurzzeitzertifikate zur temporären Identifizierung der Kraftfahrzeuge in der Umgebung des Kraftfahrzeugs umfassen. Die Einrichtung kann ausgebildet sein, die Übertragungsparameter basierend auf den digitalen Kurzzeitzertifikaten dem weiteren Kraftfahrzeug bereitzustellen. Die Einrichtung kann die digitalen Kurzzeitzertifikate beispielsweise nutzen, um auf einem von mehreren Kraftfahrzeugen geteilten Kommunikationskanal eine Datennachricht an einen spezifischen Empfänger zu adressieren. Dieser kann basierend darauf beispielsweise eine Datenkommunikationsverbindung über die zweite Funkschnittstelle aufbauen.

In zumindest einigen Ausführungsbeispielen können die digitalen Kurzzeitzertifikate Pseudonymzertifikaten einer Fahrzeug-zu-Fahrzeug-Datenkommunikation entsprechen. Die Pseudonymzertifikate können beispielsweise von dem weiteren Kraftfahrzeug erkannt werden, falls sie von diesem bei der Bereitstellung der Datennachrichten genutzt wurden, und können so zur Adressierung des weiteren Kraftfahrzeugs genutzt werden. Die Pseudonymzertifikate können beispielsweise begrenzt zeitlich gültig sein, und ein Kraftfahrzeug kann beispielsweise zur gleichen Zeit mehrere Pseudonymzertifikate nutzen. Pseudonymzertifikate können beispielsweise eine für ein Fahrzeug eindeutige Kennung umfassen. Pseudonymzertifikate können beispielsweise temporär gültigen Absenderzertifikaten zur Authentifizierung von Kraftfahrzeugen entsprechen.

In einigen Ausführungsbeispielen können die Datennachrichten über den Status ferner Information über eine Position der Kraftfahrzeuge in der Umgebung des Kraftfahrzeugs umfassen. Die Einrichtung kann ferner ausgebildet sein, um die Übertragungsparameter ferner basierend auf der Information über die Position und basierend auf einer Position des Kraftfahrzeugs zu übertragen. Die Einrichtung kann beispielsweise die Position der Kraftfahrzeuge in der Umgebung des Kraftfahrzeugs mit der Position des Kraftfahrzeugs vergleichen und entscheiden, ob Sensordaten eines Kraftfahrzeugs in der Umgebung des Kraftfahrzeugs relevant oder interessant für das Kraftfahrzeug sind und die Übertragungsparameter basierend auf der Relevanz bereitstellen.

In zumindest manchen Ausführungsbeispielen können die Datennachrichten über den Status ferner Information über verfügbare Sensormessungen umfassen. Die Einrichtung kann ferner ausgebildet sein, die Übertragungsparameter ferner basierend auf der Information über die verfügbaren Sensormessungen zu übertragen. Die Einrichtung kann so beispielsweise ausgebildet sein, die Übertragungsparameter an Kraftfahrzeuge zu übertragen, deren Sensordaten für das Kraftfahrzeug relevant oder interessant sind.

In einigen Ausführungsbeispielen kann die erste Schnittstelle einer Fahrzeug-zu-Fahrzeug-Schnittstelle entsprechen. Die Datennachrichten über den Status können beispielsweise Cooperative Awareness Messages, CAM, entsprechen. Die CAM können beispielsweise Informationen über einen Zustand, eine Position, einen Bewegungsvektor oder ein Kurzzeitzertifikat zur Authentifizierung des Kraftfahrzeugs, welches die CAM bereitgestellt hat, umfassen. Die Einrichtung kann diese Informationen nutzen um die zweite Kommunikationsschnittstelle aufzubauen und die Übertragungsparameter dafür bereitzustellen.

In zumindest manchen Ausführungsbeispielen kann die Einrichtung ferner ausgebildet sein, um eine Datenkommunikationsverbindung auf der zweiten Funkschnittstelle mit dem weiteren Kraftfahrzeug herzustellen. Über die Datenkommunikationsverbindung können beispielsweise Sensordaten übertragen werden oder Datennachrichten von Kraftfahrzeugen in einer Umgebung des Kraftfahrzeugs weitergeleitet werden.

In zumindest einigen Ausführungsbeispielen kann die Einrichtung ausgebildet sein, Datennachrichten über einen Status von Kraftfahrzeugen in einer Umgebung des Kraftfahrzeugs über die erste Funkschnittstelle zu erhalten. Die Einrichtung kann ferner ausgebildet sein, die Datennachrichten über den Status der Kraftfahrzeuge in der Umgebung des Kraftfahrzeugs über die zweite Funkschnittstelle dem weiteren Kraftfahrzeug bereitzustellen. Durch die Weitergabe der Datennachrichten kann die Einrichtung beispielsweise eine Ausweitung des Übertragungsbereichs des weiteren Kraftfahrzeugs ermöglichen, oder es kann eine Weitergabe der Datennachrichten an ein Kraftfahrzeug oder einen Datensammelstelle ermöglichen, welche beispielsweise mit dem Internet verbunden sind.

In manchen Ausführungsbeispielen kann die zweite Funkschnittstelle einer Mobilfunkschnittstelle zu einem Mobilfunksystem der 5. Generation (5G) entsprechen. Die Einrichtung kann ausgebildet sein, eine direkte Gerät-zu-Gerät-Verbindung über die zweite Funkschnittstelle herzustellen. Die direkte Gerät-zu-Gerät-Verbindung kann beispielsweise eine Nutzung von 5G-Funktechnologien in Gegenden ermöglichen, in denen keine 5G-Funkzelle zur Verfügung steht.

In einigen Ausführungsbeispielen kann die erste Funkschnittstelle einer direkten Fahrzeug-zu-Fahrzeug-Funkschnittstelle entsprechen. Die direkte Fahrzeug-zu-Fahrzeug-Funkschnittstelle kann beispielsweise eine Kommunikation mit Fahrzeugen in einer Umgebung des Kraftfahrzeugs ermöglichen. Die zweite Funkschnittstelle kann eine Schnittstelle zu einem zellularen Mobilfunksystem entsprechen. Das zellulare Mobilfunksystem kann beispielsweise eine höhere Übertragungskapazität zwischen Kraftfahrzeugen ermöglichen, oder etwa eine Anbindung an das Internet.

In zumindest manchen Ausführungsbeispielen kann das zelluläre Mobilfunksystem einem Global System for Mobile Communications, GSM, einem Universal-Mobile Telecommunication Systems, UMTS, einem Long-Term-Evolution-Mobilfunksystem, LTE, einem Long-Term-Evolution-Advanced- Mobilfunksystem, LTE-a, oder einem Mobilfunksystem der 5. Generation, 5G, entsprechen. Das zellulare Mobilfunksystem kann beispielsweise eine höhere Übertragungskapazität zwischen Kraftfahrzeugen ermöglichen, oder etwa eine Anbindung an das Internet.

In einigen Ausführungsbeispielen kann die erste Funkschnittstelle für eine direkte Datenkommunikation mit dem weiteren Fahrzeug ausgebildet sein. Dies kann beispielsweise eine gleichzeitige Übertragung von Daten, etwa Datennachrichten über den Status eines Fahrzeugs, an eine Mehrzahl von Empfängern ermöglichen.

Die erste Funkschnittstelle kann beispielsweise für eine direkte Datenkommunikation gemäß IEEE 802.11p (Standard 802.11p des Institute of Electrical and Electronics Engineers, Institut der Elektroingenieure) ausgebildet sein. Diese kann beispielsweise eine direkte Übertragung von Daten zwischen Fahrzeugen ermöglichen.

Die zweite Funkschnittstelle kann für eine direkte oder mittelbare Datenkommunikation mit dem weiteren Fahrzeug ausgebildet sein. Durch eine direkte Datenkommunikation kann beispielsweise eine Abhängigkeit von einer Basisstation verringert werden und eine Latenz verringert werden. Die mittelbare Datenkommunikation kann eine größere Reichweiter ermöglichen.

Ausführungsbeispiele schaffen ferner ein Verfahren für eine Fahrzeug-zu-Fahrzeug-Datenkommunikation eines Kraftfahrzeugs mit einem weiteren Kraftfahrzeug. Das Verfahren umfasst Erhalten von Datennachrichten über einen Status von Kraftfahrzeugen in einer Umgebung des Kraftfahrzeugs über eine erste Funkschnittstelle. Die Datennachrichten umfassen Pseudonymzertifikate einer Fahrzeug-zu-Fahrzeug-Datenkommunikation. Die Pseudonymzertifikate ermöglichen eine temporäre Identifizierung der Kraftfahrzeuge in der Umgebung des Kraftfahrzeugs (der Fahrzeuge in der Umgebung des Kraftfahrzeugs, die Pseudonymzertifikate bereitstellen). Das Verfahren umfasst ferner Bereitstellen, von dem Kraftfahrzeug zu dem weiteren Kraftfahrzeug und über die erste Funkschnittstelle, von Übertragungsparametern betreffend eine Datenkommunikation zwischen dem Kraftfahrzeug und dem weiteren Kraftfahrzeug über eine zweite Funkschnittstelle, basierend auf einer Adressierung des weiteren Kraftfahrzeugs basierend auf den Pseudonymzertifikaten. Die erste Funkschnittstelle dient zur Datenkommunikation des Kraftfahrzeugs mit dem weiteren Kraftfahrzeug über ein erstes Datenkommunikationsprotokoll und mit einer ersten Übertragungskapazität. Die zweite Funkschnittstelle dient zur Datenkommunikation des Kraftfahrzeugs mit dem weiteren Kraftfahrzeug über ein zweites Datenkommunikationsprotokoll und mit einer zweiten Übertragungskapazität größer als die erste Übertragungskapazität. Das Verfahren umfasst ferner Aufbauen, basierend auf den über die erste Funkschnittstelle bereitgestellten Übertragungsparametern, einer Funkverbindung zwischen dem Kraftfahrzeug und dem weiteren Kraftfahrzeug über die zweite Funkschnittstelle.

Ausführungsbeispiele schaffen ferner ein Verfahren für eine Fahrzeug-zu-Fahrzeug-Datenkommunikation eines Kraftfahrzeugs mit einem weiteren Kraftfahrzeug. Das Verfahren umfasst Bereitstellen, von dem Kraftfahrzeug zu dem weiteren Kraftfahrzeug und über eine erste Funkschnittstelle, von Übertragungsparametern betreffend eine Datenkommunikation zwischen dem Kraftfahrzeug und dem weiteren Kraftfahrzeug über eine zweite Funkschnittstelle. Die erste Funkschnittstelle dient zur Datenkommunikation des Kraftfahrzeugs mit dem weiteren Kraftfahrzeug über ein erstes Datenkommunikationsprotokoll und mit einer ersten Übertragungskapazität. Die zweite Funkschnittstelle dient zur Datenkommunikation des Kraftfahrzeugs mit dem weiteren Kraftfahrzeug über ein zweites Datenkommunikationsprotokoll und mit einer zweiten Übertragungskapazität größer als die erste Übertragungskapazität. Das Verfahren umfasst ferner Aufbauen, basierend auf den über die erste Funkschnittstelle bereitgestellten Übertragungsparametern, einer Funkverbindung zwischen dem Kraftfahrzeug und dem weiteren Kraftfahrzeug über die zweite Funkschnittstelle.

Ausführungsbeispiele schaffen ferner ein Programm mit einem Programmcode zum Durchführen des Verfahrens, wenn der Programmcode auf einem Computer, einem Prozessor, einem Controller oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Blockdiagramm eines Ausführungsbeispiels einer Vorrichtung für eine Fahrzeug-zu-Fahrzeug Datenkommunikation eines Kraftfahrzeugs;
- Fig. 2: zeigt ein beispielhaftes Ausführungsbeispiel einer Weitergabe von Datennachrichten; und
- Fig. 3: illustriert ein Flussdiagramm eines Ausführungsbeispiels eines Verfahrens für eine Fahrzeug-zu-Fahrzeug Datenkommunikation eines Kraftfahrzeugs.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Mobilfunksysteme der 5. Generation (5G) werden aller Voraussicht nach eine Reihe von neuen Konzepten und Veränderungen einführen. Einige geplante Konzepte umfassen beispielsweise ein adaptives Wählen von Frequenzen und Übertragungswegen, und gerätebasierte Datenübertragungen, die nicht zellenbasiert sind. Große Datenvolumen zwischen Geräten könnten beispielsweise am Kern-Netzwerk (auch engl. Core Network, CN) vorbei übertragen werden. In manchen Konzepten kann Millimeterwellenübertragungstechnik höhere Datenraten bei geringerer Reichweite zur Verfügung stellen, während Massive-MIMO (Multiple Input, Multiple Output, Massive Kommunikation mittels mehrfacher Ein- und Ausgänge) den Netzen zu höherer Effizienz verhelfen könnte. In manchen Konzepten übernehmen intelligentere leistungsfähigere Geräte Routingaufgaben.

5G Mobilfunksysteme werden dabei aller Voraussicht nach eine geringere Latenz, eine höhere Datenrate und eine höhere Verlässlichkeit als konventionelle Mobilfunksysteme, etwa Long-Term-Evolution (LTE), aufweisen. Dabei werden Geräte, beispielsweise in der Maschine-zu-Maschine-Kommunikation (M2M) in manchen Konzepten direkt untereinander kommunizieren können. Symmetrische Datenverbindung können dabei beispielsweise eine Weitergabe von Datenverkehr (auch engl. Relaying) an Kommunikationspartner ermöglichen.

Für zukünftige Anwendungsfälle beim Datenaustausch zwischen Verkehrsteilnehmern kann in manchen Fällen eine Übertragungskapazität von konventionellen Fahrzeug-zu-X-Datenkommunikationssystemen nicht ausreichen, um Sensordaten auszutauschen. Zumindest manche Ausführungsbeispiele nutzen direkte Gerät-zu-Gerät-Verbindungen (auch engl. Device-to-device), wie sie voraussichtlich auch in Mobilfunksystemen der 5. Generation unterstützt sein werden, um Sensordaten zwischen Kraftfahrzeug zu übertragen.

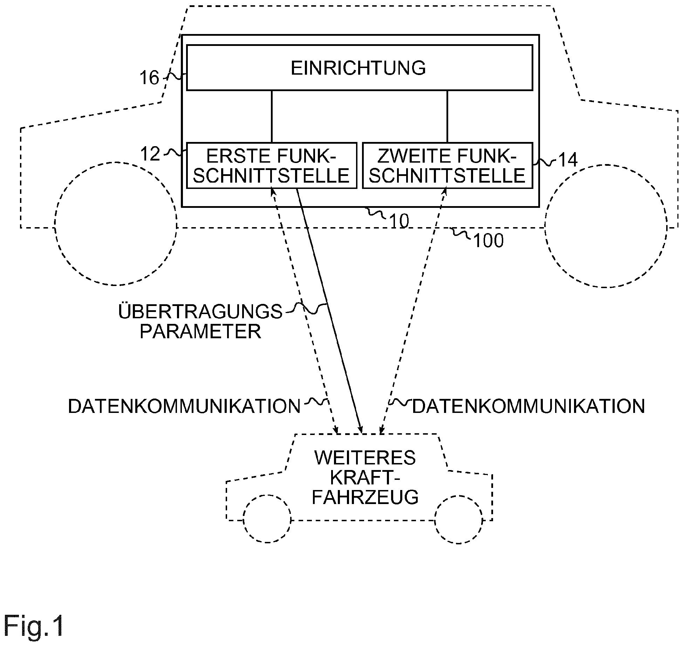

Fig. 1 illustriert ein Blockdiagramm eines Ausführungsbeispiels einer Vorrichtung für eine Fahrzeug-zu-Fahrzeug-Datenkommunikation eines Kraftfahrzeugs 100. Die Fahrzeug-zu-Fahrzeug-Datenkommunikation kann beispielsweise einem Austausch von Fahrzeugdaten, beispielsweise von Standorten, Bewegungsvektoren, Sensordaten etc. zwischen Fahrzeugen entsprechen. Diese können beispielsweise einem Fahrzeug-zu-Fahrzeug-Kommunikationsstandard entsprechen, etwa Standards des Car2Car-Konsortiums, beispielsweise die bei dem European Telecommunications Standards Institute hinterlegten Standards EN 302 637-2, EN 302 637-3, EN 302 663, EN 302 636-4-1/2, EN 302 636-5-1, EN 302 636-6-1, TS 102 539-1, TS 102 539-2 oder TS 102 539-3.

Die Vorrichtung umfasst eine erste Funkschnittstelle 12 zur Datenkommunikation des Kraftfahrzeugs mit einem weiteren Kraftfahrzeug über ein erstes Datenkommunikationsprotokoll und mit einer ersten Übertragungskapazität. Die Vorrichtung umfasst ferner eine zweite Funkschnittstelle 14 zur Datenkommunikation des Kraftfahrzeugs mit dem weiteren Kraftfahrzeug über ein zweites Datenkommunikationsprotokoll und mit einer zweiten Übertragungskapazität. Die zweite Übertragungskapazität ist größer als die erste Übertragungskapazität. In einem bevorzugten Ausführungsbeispiel entspricht die erste Funkschnittstelle 12 einer direkten Fahrzeug-zu-Fahrzeug-Funkschnittstelle. Die erste Funkschnittstelle 12 kann beispielsweise für eine direkte Datenkommunikation mit dem weiteren Kraftfahrzeug ausgebildet sein, beispielsweise gemäß IEEE 802.11 p. Die zweite Funkschnittstelle 14 kann beispielsweise einer Schnittstelle zu einem zellulären Mobilfunksystem entsprechen. Die zweite Funkschnittstelle 14 kann beispielsweise für eine direkte oder mittelbare Datenkommunikation mit dem weiteren Kraftfahrzeug ausgebildet sein. Die direkte Datenkommunikation kann beispielsweise einer Datenkommunikation entsprechen, an der lediglich die Vorrichtung 10 und das weitere Kraftfahrzeug beteiligt sind. Die mittelbare Datenkommunikation kann beispielsweise einer Kommunikation über eine weitere Entität, beispielsweise über eine Basisstation oder ein Netzwerk eines Mobilfunkbetreibers entsprechen. Eine Verbindung, die mit Hilfe einer Basisstation aufgebaut wurde (beispielsweise durch Zuweisung von Funkressourcen), aber ansonsten nur zwischen der Vorrichtung 10 und dem weiteren Kraftfahrzeug stattfindet, kann in einigen Ausführungsbeispielen als direkte Datenverbindung gesehen werden. In einigen Ausführungsbeispielen kann die erste Funkschnittstelle 12 ein Übertragen von Datennachrichten über einen geteilten Kanal ermöglichen, und/oder die erste Funkschnittstelle 12 kann ein Übertragen von Datennachrichten ohne einen mehrseitigen Verbindungsaufbau ermöglichen, und/oder die erste Funkschnittstelle 12 kann einer Verteiler-Funkschnittstelle (auch engl. Broadcast) zum Verteilen von Datennachrichten an eine Mehrzahl von Empfängern entsprechen. In manchen Ausführungsbeispielen kann die erste Funkschnittstelle 12 über Frequenzen in einem 5,9Ghz-Frequenzbereich kommunizieren (z.B. zwischen 5,85Ghz und 5,925 GHz).

Die Vorrichtung umfasst ferner eine Einrichtung 16 zum Bereitstellen, über die erste Funkschnittstelle 12, von Übertragungsparametern betreffend eine Datenkommunikation zwischen dem Kraftfahrzeug und dem weiteren Kraftfahrzeug über die zweite Funkschnittstelle. Die Einrichtung 16 ist ausgebildet zum Erhalten von Datennachrichten über einen Status von Kraftfahrzeugen in einer Umgebung des Kraftfahrzeugs 100 über die erste Funkschnittstelle 12. Die Datennachrichten umfassen beispielsweise Pseudonymzertifikate einer Fahrzeug-zu-Fahrzeug-Datenkommunikation. Die Pseudonymzertifikate können eine temporäre Identifizierung der Kraftfahrzeuge in der Umgebung des Kraftfahrzeugs 100 ermöglichen. Das Bereitstellen der Übertragungsparameter kann auf einer Adressierung des weiteren Kraftfahrzeugs basierend auf den Pseudonymzertifikaten basieren.

Das Kontrollmodul 16 kann beispielsweise ausgebildet sein, um die Übertragungsparameter zu übertragen, falls Daten übertragen werden sollen, die eine größere Übertragungskapazität nötig machen.

In zumindest einigen Ausführungsbeispielen können die Übertragungsparameter zumindest ein Element der Gruppe von Frequenzressource, Frequenzband, Modulation, Zeitressource, Antennenrichtung, Strahlbündel-Parameter (auch engl. beamforming parameters), Protokoll und unterstützte Fähigkeiten der zweiten Funkschnittstelle 14 umfassen. In einigen Ausführungsbeispielen kann die Einrichtung 16 ausgebildet sein, die Übertragungsparameter zu bestimmen, beispielsweise basierend auf einem Beobachten eines Frequenzbereichs über die zweite Funkschnittstelle 14, und/oder die Einrichtung 16 kann ausgebildet sein, die Übertragungsparameter zu erhalten, beispielsweise von einer Basisstation eines Mobilfunksystems.

In einigen Ausführungsbeispielen kann die erste Schnittstelle 12 einer Fahrzeug-zu-Fahrzeug-Schnittstelle entsprechen, beispielsweise zur direkten Kommunikation zwischen Kraftfahrzeugen. Das Kraftfahrzeug kann über die erste Schnittstelle 12 beispielsweise Datennachrichten mit Kraftfahrzeugen in seiner Umgebung austauschen. Die Datennachrichten können beispielsweise einen Status (etwa eine Position und einen Bewegungsvektor) des Kraftfahrzeugs umfassen. Die Cooperative Awareness Messages (kooperative Bekanntmachungs-Nachrichten, periodische Datennachrichten, die ein Fahrzeug verschickt, um seine Präsenz anderen Fahrzeugen kenntlich zu machen) sind ein Beispiel für solche Datennachrichten. Diese Datennachrichten können beispielsweise aktuelle Informationen über das Kraftfahrzeug erhalten, beispielsweise die Position und den Bewegungsvektor, aber auch beispielsweise Sensordaten wie eine Beschleunigung, Geschwindigkeit und ähnliches. Die Einrichtung 16 kann beispielsweise ausgebildet sein, Datennachrichten (auch engl. data messages, datagrams) über einen Status von Kraftfahrzeugen in einer Umgebung des Kraftfahrzeugs 100 über die erste Funkschnittstelle 12 zu erhalten.

Manche Sensoren, beispielsweise Videosensoren, können Datenmengen erzeugen, die teilweise aufgrund ihrer Größe nicht über solche periodischen Datennachrichten übertragen werden können. Beispielsweise können Sensordaten auch Anforderungen an eine Obergrenze einer Latenz aufweisen, die mit periodischen Datennachrichten nicht einzuhalten ist, beispielsweise bei der Weitergabe von Videodaten zur entfernten Steuerung eines Fahrzeugs oder als Sichthilfe für andere Fahrzeuge.

Beispielsweise in solchen Fällen kann die Einrichtung 16 ausgebildet sein, eine Datenkommunikationsverbindung auf der zweiten Funkschnittstelle mit dem weiteren Kraftfahrzeug herzustellen. Beispielsweise können diese Sensordaten dann über die zweite Funkschnittstelle übertragen werden, welche eine größere Übertragungskapazität bereitstellt. Die Übertragungskapazität kann sich dabei beispielsweise auf eine größere Bandbreite beziehen, oder auf eine größere Menge von gleichzeitig übertragenden Fahrzeugen, was beispielsweise durch die Nutzung von Strahl-Bündelung (auch engl. Beam-Forming) erreicht werden kann, wodurch eine räumliche Aufteilung des Übertragungsspektrums eine größere Übertragungskapazität schaffen kann. In einigen Ausführungsbeispielen kann die zweite Funkschnittstelle ferner eine geringere Latenz aufweisen als die erste Funkschnittstelle, beispielsweise wenn das erste Übertragungsprotokoll auf periodischen Datennachrichten (etwa CAM) basiert.

In manchen Ausführungsbeispielen können die Datennachrichten über den Status ferner Information über verfügbare Sensormessungen umfassen. In vielen Fällen sind nicht alle Sensormessungen für alle Fahrzeuge oder Fahrsituationen gleich relevant. Beispielsweise könnten in einer unübersichtlichen Fahrsituation Videodaten eines vorausfahrenden Fahrzeugs einen Überholvorgang sicherer machen, aber in anderen Situationen beispielsweise nicht genutzt werden. Oder verschiedene Fahrzeuge können über unterschiedliche Darstellungs- oder Analyseeinrichtungen verfügen. Die Einrichtung 16 kann ferner ausgebildet sein, die Übertragungsparameter ferner basierend auf der Information über die verfügbaren Sensormessungen zu übertragen. Beispielsweise kann die Einrichtung 16 ausgebildet sein, die Übertragungsparameter Kraftfahrzeugen zu übermitteln, deren verfügbare Sensordaten in einer aktuellen oder vorhersehbaren Fahrsituation relevant sind für das Kraftfahrzeug 100, beispielsweise vor einem Überholvorgang oder beim Einscheren auf einer Autobahnauffahrt.

In einigen Ausführungsbeispielen können die Datennachrichten über den Status ferner Information über eine Position der Kraftfahrzeuge in der Umgebung des Kraftfahrzeugs 100 umfassen. Die Einrichtung 16 kann ferner ausgebildet sein, die Übertragungsparameter ferner basierend auf der Information über die Position und basierend auf einer Position des Kraftfahrzeugs 100 zu übertragen. Die Einrichtung 16 kann beispielsweise ausgebildet sein, Kraftfahrzeuge in seiner Umgebung zu identifizieren, deren Sensordaten in bestimmen Fahrsituationen relevant sind. Beispielsweise könnte dadurch unter den empfangenen Datennachrichten jene identifiziert werden, die von Fahrzeugen übermittelt wurden, die sich in einer unmittelbaren Nähe des Kraftfahrzeugs 100 befinden und die sich beispielsweise in die gleiche (oder in die entgegengesetzte) Richtung bewegen. Basierend auf deren Position kann die Einrichtung 16 beispielsweise die Übertragungsparameter übertragen, und beispielsweise eine Datenverbindung über die zweite Funkschnittstelle 14 aufbauen, um die relevanten Sensordaten zu übertragen.

Die Übertragung der Übertragungsparameter basiert dabei in zumindest einigen Ausführungsbeispielen auf einer Identifizierung des weiteren Kraftfahrzeugs. In manchen Ausführungsbeispielen können die Datennachrichten digitale Kurzzeitzertifikate zur temporären Identifizierung der Kraftfahrzeuge in der Umgebung des Kraftfahrzeugs 100 umfassen. Die Einrichtung 16 kann ausgebildet sein, die Übertragungsparameter basierend auf den digitalen Kurzzeitzertifikaten dem weiteren Kraftfahrzeug bereitzustellen. Die digitalen Kurzzeitzertifikate können beispielsweise Pseudonymzertifikaten einer Fahrzeug-zu-Fahrzeug-Datenkommunikation entsprechen, die beispielsweise in einer CAM umfasst sind. Pseudonymzertifikate erlauben beispielsweise eine Authentifizierung eines Fahrzeugs, welches die CAM gesendet hat, ohne eindeutige Rückschlüsse auf den Sender zu geben. Pseudonymzertifikate werden in einigen Ausführungsbeispielen aus Langzeitzertifikaten erzeugt, haben eine kürzere Gültigkeitsdauer als diese, wobei eine Mehrzahl von Pseudonymzertifikaten gleichzeitig gültig ist und alternierend verwendet wird, um eine Nachverfolgung zu erschweren.

Beispielsweise kann die Einrichtung 16 ausgebildet sein, das digitale Kurzzeitzertifikat des weiteren Kraftfahrzeugs in eine Datennachricht zu übernehmen, so dass das weitere Kraftfahrzeug beim Empfangen der Datennachricht feststellen kann, dass diese Datennachricht für das weitere Kraftfahrzeug bestimmt war. Dies kann beispielsweise auf einem Datenkanal mit zufälligen Zugriff (auch engl. random access channel oder contention-based channel) eine Adressierung des weiteren Kraftfahrzeugs ermöglichen. Das weitere Kraftfahrzeug kann dann beispielsweise die Übertragsungsparameter nutzen, um die Datenverbindung mit dem Kraftfahrzeug 100 aufzubauen.

In einer beispielhaften Implementierung kann die zweite Funkschnittstelle 14 beispielsweise einer Mobilfunkschnittstelle zu einem Mobilfunksystem der 5. Generation, 5G, entsprechen. Die Einrichtung 16 kann beispielsweise ausgebildet sein, um eine direkte Gerät-zu-Gerät-Verbindung über die zweite Funkschnittstelle 14 herzustellen. Die Einrichtung 16 kann beispielsweise ausgebildet sein, über die zweite Funkschnittstelle 14 Frequenzbänder und - ressourcen zu identifizieren, die für eine Datenübertragung genutzt werden, um beispielsweise Datenübertragungsressourcen zu bestimmen, die für eine direkte Gerät-zu-Gerät-Kommunikation nutzbar sind. Dazu kann die Einrichtung 16 beispielsweise ausgebildet sein, um Datenübertragungsressourcen, die für Kontrollkanäle des Mobilfunksystems genutzt werden, zu überwachen, um herauszufinden, ob es eine Netzabdeckung des Mobilfunksystems gibt. Gibt es diese nicht, so kann die Einrichtung 16 beispielsweise die Übertragungsparameter basierend auf den Datenübertragungsressourcen zu bestimmen, die für eine direkte Gerät-zu-Gerät-Kommunikation nutzbar sind. Die Einrichtung 16 kann diese Datenübertragungsressourcen beispielsweise nutzen, um eine Datenverbindung mit dem weiteren Fahrzeug aufzubauen.

In zumindest einigen Ausführungsbeispielen kann die Einrichtung 16 ausgebildet sein, eine Internet-Protokoll (IP)-Adresse des Kraftfahrzeugs 100 oder der Vorrichtung 10 als Übertragungsparameter oder zusätzlich zu den Übertragungsparametern dem weiteren Kraftfahrzeug bereitzustellen. Eine IP-Adresse kann beispielsweise genutzt werden, um Entitäten über die zweite Funkschnittstelle 14 zu adressieren. Das weitere Kraftfahrzeug kann die IP-Adresse beispielsweise nutzen, um eine Verbindung zu dem Kraftfahrzeug 100 und/oder der Vorrichtung 10 aufzubauen. Die Einrichtung 16 kann beispielsweise ausgebildet sein, über die erste Funkschnittstelle 12 eine IP-Adresse des weiteren Kraftfahrzeugs zu erhalten. Beispielsweise kann das weitere Kraftfahrzeug ausgebildet sein, seine IP-Adresse basierend auf einem Pseudonymzertifikat des Kraftfahrzeugs 100 oder der IP-Adresse des Kraftfahrzeugs 100 oder der Vorrichtung 10 der Vorrichtung 10 bereitzustellen. Die Einrichtung 16 kann beispielsweise ausgebildet sein, eine direkte Verbindung mit dem weiteren Kraftfahrzeug basierend auf der IP-Adresse des weiteren Kraftfahrzeugs aufzubauen oder eine direkte Verbindung mit dem weiteren Kraftfahrzeug aufzubauen und diesem eine IP-Adresse zuzuweisen. Beispielsweise kann die IP-Adresse des Kraftfahrzeugs auf dem Pseudonymzertifikat basieren. In einigen Ausführungsbeispielen ist die Einrichtung 16 ausgebildet, basierend auf einer IP-Adresse der Vorrichtung 10 oder des Kraftfahrzeugs 100 und der IP-Adresse des weiteren Kraftfahrzeugs die Verbindung herzustellen und/oder zu kommunizieren.

Bestimmt die Einrichtung 16 eine Netzabdeckung des Mobilfunksystems, so kann diese beispielsweise den Aufbau einer direkten Datenverbindung über eine Basisstation des Mobilfunksystems auslösen und beispielsweise die Übertragungsparameter von der Basisstation erhalten und dem weiteren Kraftfahrzeug über die erste Funkschnittstelle bereitstellen. Die Übertragungsparameter können dabei beispielsweise Frequenz- oder weitere Datenübertragungsressourcen umfassen, die die Basisstation der direkten Verbindung der Vorrichtung 10 mit dem weiteren Kraftfahrzeug zugeordnet hat.

In einigen Ausführungsbeispielen kann die Einrichtung 16 ausgebildet sein, um die Datennachrichten über den Status der Kraftfahrzeuge in der Umgebung des Kraftfahrzeugs 100 über die zweite Funkschnittstelle 14 dem weiteren Kraftfahrzeug bereitzustellen. Beispielsweise kann die Einrichtung 16 ausgebildet sein, um die Datennachrichten über die zweite Funkschnittstelle 14 weiterzuleiten.

In einem beispielhaften Ausführungsbeispiel kann die Vorrichtung 10 ausgebildet sein, um Sensordaten für eine Nutzung in Autopiloten oder Assistenzsystemen von Kraftfahrzeugen Verfügbar zu machen. Für eine weitergehende Automatisierung ist neben zusätzlicher Sensorik auch ein Austausch von Sensordaten mit den umgebenden Fahrzeugen wünschenswert um das Fahren komfortabel zu machen. Die Leistungsfähigkeit der Kommunikationstechnologie kann maßgeblich darüber entscheiden, wie komfortabel die Fahrfunktion sein kann. Für eine Positionierung werden häufig hochaktuelle Karten vom Backend (Server in einem Kernnetzwerk eines Mobilfunksystems oder in einem Unternehmensnetzwerk) ins Fahrzeug geladen. In umgekehrter Richtung können Lokalisierungsdaten zum Backend geschickt werden um aktuelle Veränderungen für das automatische Fahren in den Karten abzubilden. Die Sicherheit kann in einigen Ausführungsbeispielen durch den Austausch von Sensordaten nochmals verbessert werden, indem Fahrzeuge ihre eigenen Beobachtungen mit denen anderer Fahrzeuge abgleichen. Dadurch wird es beispielsweise in einigen Ausführungsbeispielen ermöglicht, im Mischverkehr automatisierte und manuell gefahrene Fahrzeuge zu betreiben, da auch nicht kommunizierende Fahrzeuge erkannt und deren Fahrverhalten kommuniziert und besser in die Planung mit einbezogen werden. Sicherheitsrelevante Kommunikation zwischen Fahrzeugen ist in konventionellen Mobilfunksystemen erschwert, da eine Ende-zu-Ende-Latenz zu groß ist und bereits mit nur moderaten Teilnehmerzahlen in den Zellen häufig stark ansteigt.

Eine Ende-zu-Ende Verzögerung in der Größenordnung unter 10ms (Ziel 1 ms) sind wünschenswert, um kooperative Umplanungen im Falle eines unerwarteten Ereignisses. z.B. Ball oder Wild auf der Fahrbahn. zu ermöglichen. Stausituationen können eine Kommunikation von tausenden Teilnehmern innerhalb einer Kommunikationszelle erforderlich machen. So haben beispielsweise in einem 5km langen Stau auf einer dreispurigen Autobahn ca. 2500 Fahrzeuge und deren Insassen Kommunikationsbedarf. Es kann wünschenswert sein, die Kommunikation unabhängig vom Netzwerkbetreiber sicherzustellen und eine Zuverlässigkeit zu erhöhen. Zumindest manche Ausführungsbeispiele können durch ein Weiterleiten von Datennachrichten über Sensordaten, welche sie über die erste 12 oder zweite 14 Funkschnittstelle erhalten haben, eine Verfügbarkeit und Verteilung der Sensordaten auch in schlecht- oder nicht von einem Mobilfunksystem abgedeckten Gebiet ermöglichen. Die Einrichtung 16 kann in einigen Ausführungsbeispielen ausgebildet sein, Datennachrichten über Sensordaten, die es über die erste 12 oder zweite 14 Funkschnittstelle erhalten hat, über die erste 12 oder die zweite 14 Funkschnittstelle an Kraftfahrzeuge in einer Umgebung des Kraftfahrzeugs 100 weiterzuleiten. Beispielsweise könnte die Einrichtung 16 auch ausgebildet sein, Datennachrichten über Kartenmaterial über die erste 12 oder zweite 14 Funkschnittstelle zu erhalten und über die erste 12 oder die zweite 14 Funkschnittstelle an Kraftfahrzeuge in einer Umgebung des Kraftfahrzeugs 100 weiterzuleiten. Dies kann beispielsweise Komfortfunktionen wie ein zumindest teilweise automatisiertes Fahren ermöglichen, welches sicherer, effizienter und umweltschonender als herkömmliche individuelle Mobilität sein kann. Beispielsweise kann die Einrichtung 16 ausgebildet sein, für das Weiterleiten die Übertragungsparameter über die erste Funkschnittstelle 12 bereitzustellen und eine Verbindung über die zweite Funkschnittstelle 14 basierend auf den Übertragungsparametern aufzubauen.

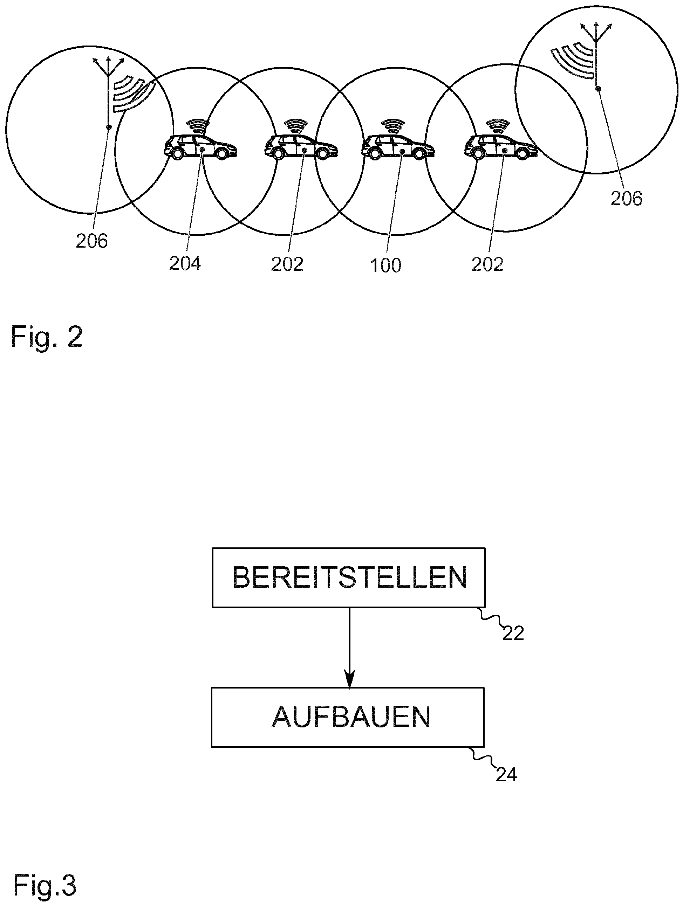

Fig. 2 zeigt ein beispielhaftes Ausführungsbeispiel eines Kraftfahrzeugs 100 umfassend die Vorrichtung 10. Die Einrichtung 16 kann beispielsweise ausgebildet sein, Datennachrichten der weiteren Kraftfahrzeuge 202 zu erhalten und/oder Datennachrichten an diese weiterzuleiten. Die Kraftfahrzeuge 202 umfassen ferner die Vorrichtung 10, welche ausgebildet ist, die Datennachrichten weiterzuleiten, beispielsweise einem Kraftfahrzeug 204 oder einer Basisstation 206 eines Mobilfunksystems. So kann beispielhaft ermöglicht werden, dass das Fahrzeug 100 die Datennachrichten mit Sensordaten weiterleite, und/oder dass das Fahrzeug 100 welches im beispielhaften Ausführungsbeispiel nicht über einen direkten Zugang zum Mobilfunksystem verfügt, Datennachrichten, welche beispielsweise Sensordaten umfassen können, über die Basisstation 206 des Mobilfunksystems bereitstellen und/oder erhalten kann.

Hochautomatisiertes Fahren kann auch ein Fahren für Menschen mit Behinderungen, die alleine nicht in der Lage sind ein Fahrzeug zu führen. Da für das hochautomatisierte Fahren immer noch ein Eingreifen des Fahrzeugführers notwendig sein oder aufgrund der Umwelt ein automatisches Fahren nicht möglich sein kann, bietet das ferngeführte Fahren für diese Menschen eine extreme Steigerung ihrer Mobilität. Der eigentliche Fahrer kann in einer Zentrale sitzen und das Kraftfahrzeug durch Bereiche steuern, in denen automatisches Fahren nicht möglich ist. Des Weiteren könnte dieser Fahrer auch die Führung des Fahrzeuges übernehmen, wenn ein Fahrer im Fahrzeug. z.B. aus gesundheitlichen Gründen, Herzinfarkt, Diabetesschock, etc. nicht mehr in der Lage ist. die Führung zu übernehmen. Hier kann die Rettungskette erheblich verkürzt werden, wenn sich zu Rettender und Retter aufeinander zu bewegen. Mit konventionellen Mobilfunksystemen erscheint eine Implementierung aufgrund der Latenz und Abdeckungsproblematik nicht möglich.

Eine Ende-zu-Ende Verzögerung in der Größenordnung unter 10ms (Ziel 1 ms) erscheinen erforderlich, um ferngeführtes Fahren zu ermöglichen, ohne dass der Fahrer in der Zentrale unter Übelkeit leidet, ein Phänomenen, das auch unter "gaming sickness" (Spielübelkeit) bekannt ist und auf der Verzögerung zwischen Ansteuersignal und Reaktion in der Videodarstellung beruht. Auch in Stausituationen scheint es wünschenswert, die latenzarme, hochauflösende Videoübertragung zu gewährleisten. Eine Kommunikation unabhängig vom Netzwerkbetreiber scheint wie eine erhöhte Zuverlässigkeit der Datenübertragung wünschenswert.

Zumindest manche Ausführungsbeispiele können durch ein Weiterleiten von Datennachrichten über Sensordaten, welche sie über die erste 12 oder zweite 14 Funkschnittstelle erhalten haben, eine Verfügbarkeit und Verteilung der Sensordaten mit einer reduzierten Latenz auch in schlecht- oder nicht von einem Mobilfunksystem abgedeckten Gebiet ermöglichen. Die Einrichtung 16 in einigen Ausführungsbeispielen ausgebildet sein, Datennachrichten über Sensordaten, etwa Videosensordaten, die es über die erste 12 oder zweite 14 Funkschnittstelle erhalten hat, über die erste 12 oder die zweite 14 Funkschnittstelle an Kraftfahrzeuge und/oder Infrastrukturentitäten in einer Umgebung des Kraftfahrzeugs 100 weiterzuleiten. Beispielsweise könnte die Einrichtung 16 auch ausgebildet sein, Datennachrichten über Videosensordaten über die erste 12 oder zweite 14 Funkschnittstelle zu erhalten und über die erste 12 oder die zweite 14 Funkschnittstelle an Kraftfahrzeuge oder Infrastrukturentitäten, etwa Basisstationen des Mobilfunksystems oder einer Leitstelle einer Verkehrsinfrastruktur in einer Umgebung des Kraftfahrzeugs 100 weiterzuleiten. Dies kann beispielsweise eine Sicherheit beim Fahren und Mobilität auch für Nutzergruppen, die bisher davon ausgeschlossen sind, ermöglichen. Durch Nutzung der automobilen Kommunikationstechnik für Relaying kann das ferngeführte Fahren auch dort stattfinden, wo keine Netzabdeckung des Mobilfunksystems zur Verfügung steht. Beispielsweise kann die Einrichtung 16 ausgebildet sein, für das Weiterleiten die Übertragungsparameter über die erste Funkschnittstelle 12 bereitzustellen und eine Verbindung über die zweite Funkschnittstelle 14 basierend auf den Übertragungsparametern aufzubauen.

Ein Kraftfahrzeug, beispielsweise das Kraftfahrzeug 100, kann beispielsweise einem Landkraftfahrzeug, einem Wasserkraftfahrzeug, einem Luftkraftfahrzeug, einem Schienenkraftfahrzeug, einem Straßenkraftfahrzeug, einem Auto, einem Geländekraftfahrzeug, oder einem Lastkraftfahrzeug entsprechen.

In zumindest manchen Ausführungsbeispielen kann das zelluläre Mobilfunksystem beispielsweise einem Global System for Mobile Communications (GSM), einem Universal-Mobile Telecommunication Systems (UMTS), einem Long-Term-Evolution-Mobilfunksystem (LTE), einem Long-Term-Evolution-Advanced-Mobilfunksystem (LTE-A), oder einem Mobilfunksystem der 5. Generation, 5G, entsprechen. Das zelluläre Mobilfunksystem, oder auch Mobilfunkkommunikationsnetzwerk, kann beispielsweise einem Mobilfunksystem entsprechen.

Ausführungsbeispiele können daher von einer Funkschnittstelle Gebrauch machen, das zur Kommunikation von Daten über ein Mobilfunksystem mit einem Server oder Computer oder einem anderen Kommunikationspartner ausgebildet ist, der beispielsweise über Internet bzw. das World Wide Web (WWW) oder ein anderes Netz erreichbar ist. Das Mobilfunksystem kann beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (Time Division Multiple Access (TDMA)), Frequenzbereichsvielfachzugriffsverfahren (Frequency Division Multiple Access (FDMA)), Kodebereichsvielfachzugriffsverfahren (Code Division Multiple Access (CDMA)), orthogonalen Frequenzbereichsvielfachzugriffsverfahren (Orthogonal Frequency Division Multiple Access (OFDMA)) oder einer anderen Technologie bzw. Vielfachzugriffverfahren basiert. Im Folgenden werden die Begriffe Mobilfunksystem, Mobilfunknetz, mobiles Kommunikationssystem und Mobilfunksystem synonym benutzt.

Die Einrichtung 16 kann beispielsweise einem Kontrollmodul oder einem Rechenmodul entsprechen. In Ausführungsbeispielen kann die Einrichtung 16 bzw. das Kontrollmodul/Rechenmodul einem beliebigen Controller oder Prozessor oder einer programmierbaren Hardwarekomponente entsprechen. Beispielsweise kann die Einrichtung 16 bzw. das Kontrollmodul/Rechenmodul auch als Software realisiert sein, die für eine entsprechende Hardwarekomponente programmiert ist. Insofern kann die Einrichtung 16 bzw. das Kontrollmodul/Rechenmodul als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung der Einrichtung 16 bzw. des Kontrollmodul/Rechenmodul denkbar.

Fig. 3 illustriert ein Flussdiagramm eines Ausführungsbeispiels eines Verfahrens für eine Fahrzeug-zu-Fahrzeug-Datenkommunikation eines Kraftfahrzeugs mit einem weiteren Kraftfahrzeug. Das Verfahren umfasst Erhalten von Datennachrichten über einen Status von Kraftfahrzeugen in einer Umgebung des Kraftfahrzeugs über eine erste Funkschnittstelle. Die Datennachrichten umfassen Pseudonymzertifikate einer Fahrzeug-zu-Fahrzeug-Datenkommunikation. Die Pseudonymzertifikate können eine temporäre Identifizierung der Kraftfahrzeuge in der Umgebung des Kraftfahrzeugs ermöglichen. Das Verfahren umfasst Bereitstellen 22, von dem Kraftfahrzeug zu dem weiteren Kraftfahrzeug und über die erste Funkschnittstelle, von Übertragungsparametern betreffend eine Datenkommunikation zwischen dem Kraftfahrzeug und dem weiteren Kraftfahrzeug über eine zweite Funkschnittstelle, basierend auf einer Adressierung des weiteren Kraftfahrzeugs basierend auf den Pseudonymzertifikaten. Die erste Funkschnittstelle dient zur Datenkommunikation des Kraftfahrzeugs mit dem weiteren Kraftfahrzeug über ein erstes Datenkommunikationsprotokoll und mit einer ersten Übertragungskapazität. Die zweite Funkschnittstelle dient zur Datenkommunikation des Kraftfahrzeugs mit dem weiteren Kraftfahrzeug über ein zweites Datenkommunikationsprotokoll und mit einer zweiten Übertragungskapazität größer als die erste Übertragungskapazität. Das Verfahren umfasst ferner Aufbauen 24, basierend auf den über die erste Funkschnittstelle bereitgestellten Übertragungsparametern, einer Funkverbindung zwischen dem Kraftfahrzeug und dem weiteren Kraftfahrzeug über die zweite Funkschnittstelle.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung
- 12: Erste Funkschnittstelle
- 14: Zweite Funkschnittstelle
- 16: Einrichtung
- 22: Bereitstellen
- 24: Aufbauen
- 100: Kraftfahrzeug
- 202: Weiteres Kraftfahrzeug
- 204: Weiteres Kraftfahrzeug
- 206: Basisstation

## Patentansprüche

1. Vorrichtung (10) für eine Fahrzeug-zu-Fahrzeug-Datenkommunikation eines Kraftfahrzeugs (100), mit folgenden Merkmalen:
einer ersten Funkschnittstelle (12) zur Datenkommunikation des Kraftfahrzeugs mit einem weiteren Kraftfahrzeug über ein erstes Datenkommunikationsprotokoll und mit einer ersten Übertragungskapazität;
einer zweiten Funkschnittstelle (14) zur Datenkommunikation des Kraftfahrzeugs mit dem weiteren Kraftfahrzeug über ein zweites Datenkommunikationsprotokoll und mit einer zweiten Übertragungskapazität, wobei die zweite Übertragungskapazität größer als die erste Übertragungskapazität ist; und
eine Einrichtung (16), ausgebildet zum:
Erhalten von Datennachrichten über einen Status von Kraftfahrzeugen in einer Umgebung des Kraftfahrzeugs (100) über die erste Funkschnittstelle (12),
wobei die Datennachrichten Pseudonymzertifikate einer Fahrzeug-zu-Fahrzeug-Datenkommunikation umfassen, wobei die Pseudonymzertifikate eine temporäre Identifizierung der Kraftfahrzeuge in der Umgebung des Kraftfahrzeugs (100) ermöglichen, und,
Bereitstellen, über die erste Funkschnittstelle (12) von Übertragungsparametern betreffend eine Datenkommunikation zwischen dem Kraftfahrzeug und dem weiteren Kraftfahrzeug über die zweite Funkschnittstelle, basierend auf einer Adressierung des weiteren Kraftfahrzeugs basierend auf den Pseudonymzertifikaten.

2. Die Vorrichtung (10) gemäß Anspruch 1, wobei die Einrichtung (16) ausgebildet ist, die Übertragungsparameter zu übertragen, falls Daten übertragen werden sollen, die eine größere Übertragungskapazität nötig machen.

3. Vorrichtung (10) gemäß einem der vorhergehenden Ansprüche, wobei die Datennachrichten über den Status ferner Information über eine Position der Kraftfahrzeuge in der Umgebung des Kraftfahrzeugs (100) umfassen, und wobei die Einrichtung (16) ferner ausgebildet ist, die Übertragungsparameter ferner basierend auf der Information über die Position und basierend auf einer Position des Kraftfahrzeugs (100) zu übertragen.

4. Vorrichtung (10) gemäß einem der vorhergehenden Ansprüche, wobei die Datennachrichten über den Status ferner Information über verfügbare Sensormessungen umfassen, und wobei die Einrichtung (16) ferner ausgebildet ist, die Übertragungsparameter ferner basierend auf der Information über die verfügbaren Sensormessungen zu übertragen.

5. Vorrichtung (10) gemäß einem der vorhergehenden Ansprüche, wobei die erste Schnittstelle (12) einer Fahrzeug-zu-Fahrzeug-Schnittstelle entspricht, und wobei die Datennachrichten über den Status Cooperative Awareness Messages, CAM, entsprechen.

6. Vorrichtung (10) gemäß einer der vorhergehenden Ansprüche, wobei die Einrichtung (16) ferner ausgebildet ist, eine Datenkommunikationsverbindung auf der zweiten Funkschnittstelle mit dem weiteren Kraftfahrzeug herzustellen.

7. Vorrichtung (10) gemäß Anspruch 6, wobei die Einrichtung (16) ausgebildet ist, Datennachrichten über einen Status von Kraftfahrzeugen in einer Umgebung des Kraftfahrzeugs (100) über die erste Funkschnittstelle (12) zu erhalten, und wobei die Einrichtung (16) ferner ausgebildet ist, die Datennachrichten über den Status der Kraftfahrzeuge in der Umgebung des Kraftfahrzeugs (100) über die zweite Funkschnittstelle (14) dem weiteren Kraftfahrzeug bereitzustellen.

8. Vorrichtung (10) gemäß einem der Ansprüche 6 oder 7, wobei die zweite Funkschnittstelle (14) einer Mobilfunkschnittstelle zu einem Mobilfunksystem der 5. Generation, 5G, entspricht, und wobei die Einrichtung (16) ausgebildet ist, eine direkte Gerät-zu-Gerät-Verbindung über die zweite Funkschnittstelle (14) herzustellen.

9. Vorrichtung (10) gemäß einem der vorhergehenden Ansprüche, wobei die erste Funkschnittstelle (12) einer direkten Fahrzeug-zu-Fahrzeug-Funkschnittstelle entspricht, und/oder wobei die zweite Funkschnittstelle (14) eine Schnittstelle zu einem zellulären Mobilfunksystem entspricht.

10. Vorrichtung (10) gemäß Anspruch 9, wobei das zelluläre Mobilfunksystem einem Global System for Mobile Communications, GSM, einem Universal Mobile Telecommunication System, UMTS, einem Long-Term-Evolution-Mobilfunksystem, LTE, einem Long-Term-Evolution-Advanced- Mobilfunksystem, LTE-A, oder einem Mobilfunksystem der 5. Generation, 5G, entspricht.

11. Vorrichtung (10) gemäß einem der vorhergehenden Ansprüche,
wobei die erste Funkschnittstelle (12) für eine direkte Datenkommunikation mit dem weiteren Fahrzeug ausgebildet ist,
wobei die erste Funkschnittstelle (12) für eine direkte Datenkommunikation gemäß IEEE 802.11p ausgebildet ist,
und/oder wobei die zweite Funkschnittstelle (14) für eine direkte oder mittelbare Datenkommunikation mit dem weiteren Fahrzeug ausgebildet ist.

12. Verfahren für eine Fahrzeug-zu-Fahrzeug-Datenkommunikation eines Kraftfahrzeugs mit einem weiteren Kraftfahrzeug, mit folgenden Schritten:
Erhalten von Datennachrichten über einen Status von Kraftfahrzeugen in einer Umgebung des Kraftfahrzeugs über eine erste Funkschnittstelle,
wobei die Datennachrichten Pseudonymzertifikate einer Fahrzeug-zu-Fahrzeug-Datenkommunikation umfassen, wobei die Pseudonymzertifikate eine temporäre Identifizierung der Kraftfahrzeuge in der Umgebung des Kraftfahrzeugs ermöglichen;
Bereitstellen (22), von dem Kraftfahrzeug zu dem weiteren Kraftfahrzeug und über die erste Funkschnittstelle, von Übertragungsparametern betreffend eine Datenkommunikation zwischen dem Kraftfahrzeug und dem weiteren Kraftfahrzeug über eine zweite Funkschnittstelle, basierend auf einer Adressierung des weiteren Kraftfahrzeugs basierend auf den Pseudonymzertifikaten,
wobei die erste Funkschnittstelle zur Datenkommunikation des Kraftfahrzeugs mit dem weiteren Kraftfahrzeug über ein erstes Datenkommunikationsprotokoll und mit einer ersten Übertragungskapazität dient und wobei die zweite Funkschnittstelle zur Datenkommunikation des Kraftfahrzeugs mit dem weiteren Kraftfahrzeug über ein zweites Datenkommunikationsprotokoll und mit einer zweiten Übertragungskapazität größer als die erste Übertragungskapazität dient; und
Aufbauen (24), basierend auf den über die erste Funkschnittstelle bereitgestellten Übertragungsparametern, einer Funkverbindung zwischen dem Kraftfahrzeug und dem weiteren Kraftfahrzeug über die zweite Funkschnittstelle.

13. Programm mit einem Programmcode zum Durchführen des Verfahrens nach Anspruch 12, wenn der Programmcode auf einem Computer, einem Prozessor, einem Controller oder einer programmierbaren Hardwarekomponente ausgeführt wird.

## Claims

1. An apparatus (10) for a vehicle-to-vehicle data communication of a motor vehicle (100), having the following features:
A first radio interface (12) for the data communication of the motor vehicle with a further motor vehicle using a first data communication protocol and with a first transmission capacity;
a second radio interface (14) for the data communication of the motor vehicle with the further motor vehicle using a second data communication protocol and with a second transmission capacity, wherein the second transmission capacity is greater than the first transmission capacity; and
a device (16), configured to:
Obtain data messages about a status of motor vehicles in a surrounding of the motor vehicle (100) via the first radio interface (12), wherein the data messages comprise pseudonym certificates for a vehicle-to-vehicle data communication, wherein the pseudonym certificates allow temporary identification of the motor vehicles in the surroundings of the motor vehicle (100), and
provide, via the first radio interface (12), transmission parameters relating to a data communication between the motor vehicle and the further motor vehicle via the second radio interface, based on an addressing of the further motor vehicle based on the pseudonym certificates.

2. The apparatus (10) according to Claim 1, wherein the device (16) is configured to transmit the transmission parameters, if data is to be transmitted, which require a larger transmission capacity.

3. The apparatus (10) according to any one of the preceding claims, wherein the data messages about the status additionally comprise information about a position of the motor vehicles in the surroundings of the motor vehicle (100), and wherein the device (16) is further configured to transmit the transmission parameters further based on the information about the position and based on a position of the motor vehicle (100).

4. The apparatus (10) according to any one of the preceding claims, wherein the data messages about the status additionally comprise information about available sensor measurements, and wherein the device (16) is further configured to transmit the transmission parameters further based on the information about the available sensor measurements.

5. The apparatus (10) according to any one of the preceding claims, wherein the first interface (12) corresponds to a vehicle-to-vehicle interface, and wherein the data messages about the status correspond to Cooperative Awareness Messages, CAM.

6. The apparatus (10) according to any one of the preceding claims, wherein the device (16) is further configured to establish a data communication connection on the second radio interface to the further motor vehicle.

7. The apparatus (10) according to Claim 6, wherein the device (16) is configured to obtain data messages about a status of motor vehicles in a surrounding of the motor vehicle (100) via the first radio interface (12), and wherein the device (16) is further configured to provide the data messages about the status of the motor vehicles in the surroundings of the motor vehicle (100) via the second radio interface (14) to the further motor vehicle.

8. The apparatus (10) according to any one of Claims 6 or 7, wherein the second radio interface (14) corresponds to a mobile radio interface to a mobile radio system of the 5^{th} generation, 5G, and wherein the device (16) is configured to establish a direct device-to-device connection via the second radio interface (14).

9. The apparatus (10) according to any one of the preceding claims, wherein the first radio interface (12) corresponds to a direct vehicle-to-vehicle radio interface, and/or wherein the second radio interface (14) corresponds to an interface to a cellular mobile radio system.

10. The apparatus (10) according to Claim 9, wherein the cellular mobile radio system corresponds to a Global System for Mobile Communications, GSM, a Universal Mobile Telecommunication System, UMTS, a Long-Term Evolution Mobile Radio System, LTE, a Long-Term Evolution Advanced Mobile Radio System, LTE-A, or a mobile radio system of the 5^{th} generation, 5G.

11. The apparatus (10) according to any one of the preceding claims,
wherein the first radio interface (12) is configured for a direct data communication with the further vehicle,
wherein the first radio interface (12) is configured for a direct data communication according to IEEE 802.11p,
and/or wherein the second radio interface (14) is configured for a direct or indirect data communication with the further vehicle.

12. A method for a vehicle-to-vehicle data communication of one motor vehicle with a further motor vehicle, with the following steps:
obtaining data messages about a status of motor vehicles in a surrounding of the motor vehicle via a first radio interface,
wherein the data messages comprise pseudonym certificates of a vehicle-to-vehicle data communication, wherein the pseudonym certificates allow a temporary identification of the motor vehicles in the surroundings of the motor vehicle;
providing (22), from the motor vehicle to the further motor vehicle and via the first radio interface, transmission parameters relating to a data communication between the motor vehicle and the further motor vehicle via a second radio interface, based on an addressing of the further motor vehicle based on the pseudonym certificates,
wherein the first radio interface serves for the data communication of the motor vehicle with the further motor vehicle via a first data communication protocol and with a first transmission capacity and wherein the second radio interface serves for the data communication of the motor vehicle with the further motor vehicle via a second data communication protocol and with a second transmission capacity greater than the first transmission capacity; and
establishing (24), based on the transmission parameters provided via the first radio interface, a radio connection between the motor vehicle and the further motor vehicle via the second radio interface.

13. A program with a program code for implementing the method according to Claim 12, if the program code is carried out on a computer, a processor, a controller or a programmable hardware component.

## Revendications

1. Dispositif (10) pour une communication de données véhicule-à-véhicule d'un véhicule automobile (100), avec les caractéristiques suivantes :
une première interface radioélectrique (12) destinée une communication de données du véhicule automobile avec un autre véhicule automobile par le biais d'un premier protocole de communication de données et avec une première capacité de transmission ;
une deuxième interface radioélectrique (14) destinée une communication de données du véhicule automobile avec l'autre véhicule automobile par le biais d'un deuxième protocole de communication de données et avec une deuxième capacité de transmission, la deuxième capacité de transmission étant plus grande que la première capacité de transmission ; et
un système (16), étant configuré pour :
l'obtention de messages de données sur un état de véhicules automobiles dans un environnement du véhicule automobile (100) par le biais de la première interface radioélectrique (12),
les messages de données comprenant des certificats de pseudonyme d'une communication de données véhicule-à-véhicule,
les certificats de pseudonyme permettant une identification temporaire des véhicules automobiles dans l'environnement du véhicule automobile (100), et
la fourniture, par le biais de la première interface radioélectrique (12), de paramètres de transmission concernant une communication de données entre le véhicule automobile et l'autre véhicule automobile par le biais de la deuxième interface radioélectrique sur la base d'un adressage de l'autre véhicule automobile sur la base des certificats de pseudonyme.

2. Le dispositif (10) selon la revendication 1, le système (16) étant configuré pour transmettre les paramètres de transmission si des données qui rendent nécessaire une capacité de transmission plus grande doivent être transmises.

3. Le dispositif (10) selon l'une des revendications précédentes, les messages de données sur l'état comprenant par ailleurs une information sur une position des véhicules automobiles dans l'environnement du véhicule automobile (100), et le système (16) étant par ailleurs configuré pour transmettre les paramètres de transmission par ailleurs sur la base de l'information sur la position et sur la base d'une position du véhicule automobile (100).

4. Le dispositif (10) selon l'une des revendications précédentes, les messages de données sur l'état comprenant par ailleurs une information sur des mesures de capteur disponibles, et le système (16) étant par ailleurs configuré pour transmettre les paramètres de transmission par ailleurs sur la base de l'information sur les mesures de capteur disponibles.

5. Le dispositif (10) selon l'une des revendications précédentes, la première interface (12) correspondant à une interface véhicule-à-véhicule, et les messages de données sur l'état correspondant à des Cooperative Awareness Messages, CAM.

6. Le dispositif (10) selon l'une des revendications précédentes, le système (16) étant par ailleurs configuré pour établir une liaison de communication de données sur la deuxième interface radioélectrique avec l'autre véhicule automobile.

7. Le dispositif (10) selon la revendication 6, le système (16) étant configuré pour obtenir des messages de données sur un état de véhicules automobiles dans un environnement du véhicule automobile (100) par le biais de la première interface radioélectrique (12), et le système (16) étant par ailleurs configuré pour fournir à l'autre véhicule automobile les messages de données sur l'état des véhicules automobiles dans l'environnement du véhicule automobile (100) par le biais de la deuxième interface radioélectrique (14).

8. Le dispositif (10) selon l'une des revendications 6 ou 7, la deuxième interface radioélectrique (14) correspondant à une interface radio mobile avec un système de radio mobile de la 5^{ème} génération, 5G, et le système (16) étant configuré pour établir une liaison appareil-à-appareil directe par le biais de la deuxième interface radioélectrique (14).

9. Le dispositif (10) selon l'une des revendications précédentes, la première interface radioélectrique (12) correspondant à une interface radioélectrique véhicule-à-véhicule directe, et/ou la deuxième interface radioélectrique (14) correspondant à une interface avec un système de radio mobile cellulaire.

10. Le dispositif (10) selon la revendication 9, le système de radio mobile cellulaire correspondant à un Global System for Mobile Communications, GSM, à un Universal Mobile Telecommunication System, UMTS, à un système de radio mobile Long-Term-Evolution, LTE, à un système de radio mobile Long-Term-Evolution-Advanced, LTE-A, ou à un système de radio mobile de la 5^{ème} génération, 5G.

11. Le dispositif (10) selon l'une des revendications précédentes, la première interface radioélectrique (12) étant constituée pour une communication de données directe avec l'autre véhicule,
la première interface radioélectrique (12) étant configurée pour une communication de données directe selon IEEE 802.11p, et/ou la deuxième interface radioélectrique (14) étant configurée pour une communication de données directe ou indirecte avec l'autre véhicule.

12. Procédé pour une communication de données véhicule-à-véhicule d'un véhicule automobile avec un autre véhicule automobile, avec les étapes suivantes :
l'obtention de messages de données sur un état de véhicules automobiles dans un environnement du véhicule automobile par le biais d'une première interface radioélectrique,
les messages de données comprenant des certificats de pseudonyme d'une communication de données véhicule-à-véhicule, les certificats de pseudonyme permettant une identification temporaire des véhicules automobiles dans l'environnement du véhicule automobile ;
la fourniture (22), à partir du véhicule automobile vers l'autre véhicule automobile et par le biais de la première interface radioélectrique, de paramètres de transmission concernant une communication de données entre le véhicule automobile et l'autre véhicule automobile par le biais d'une deuxième interface radioélectrique sur la base d'un adressage de l'autre véhicule automobile sur la base des certificats de pseudonyme,
la première interface radioélectrique servant à la communication de données du véhicule automobile avec l'autre véhicule automobile par le biais d'un premier protocole de communication de données et avec une première capacité de transmission, et la deuxième interface radioélectrique servant à la communication de données du véhicule automobile avec l'autre véhicule automobile par le biais d'un deuxième protocole de communication de données et avec une deuxième capacité de transmission plus grande que la première capacité de transmission ; et
l'établissement (24), sur la base des paramètres de transmission fournis par le biais de la première interface radioélectrique, d'une liaison radio entre le véhicule automobile et l'autre véhicule automobile par le biais de la deuxième interface radioélectrique.

13. Programme avec un code de programme destiné à la réalisation du procédé selon la revendication 12 quand le code de programme est exécuté sur un ordinateur, un processeur, un contrôleur ou un composant matériel programmable.
